# EUROPÄISCHE PATENTSCHRIFT

(11) **EP 0 592 890 B1**
(45) Veröffentlichungstag und Bekanntmachung des Hinweises auf die Patenterteilung: **05.04.1995**
(21) Anmeldenummer: 93115864.6
(22) Anmeldetag: 01.10.1993
(51) Int. Cl.: A47L 25/00

(54) **Klebebandrolle**
Adhesive roller
Rouleau adhésif

(30) Priorität: 14.10.1992 DE 4234609
(43) Veröffentlichungstag der Anmeldung: 20.04.1994
(73) Patentinhaber: GGG GEBRAUCHS GERÄTE GmbH, D-65439 Flörsheim - Bad Weilbach (DE)
(72) Erfinder: Hickey, Patrick, D-60325 Frankfurt (DE)
(74) Vertreter: von Rohr, Hans Wilhelm, Dipl.-Phys.

(56) Entgegenhaltungen:
- CH-A- 635 764
- DE-A- 1 628 637
- DE-A- 3 400 319
- US-A- 2 528 602
- US-A- 4 727 616

## Beschreibung

Die Erfindung betrifft eine Klebebandrolle mit den Merkmalen des Oberbegriffs von Anspruch 1.

Aus der DE - A - 34 00 319 ist eine Klebebandrolle für eine Kleiderreinigungsvorrichtung bekannt, bei der, schon anders als bei sonstigen aus dem Stand der Technik bekannten Klebebandrollen mit einem einzigen auf einem Wickelkörper aufgewickelten Klebeband (DE - C - 31 11 150), mehrere, von vornherein voneinander getrennte Klebebänder auf dem Wickelkörper aufgewickelt sind, die jeweils nur auf einer Seite eine Klebstoffschicht und auf der anderen Seite in einem sich über die gesamte Streifenbreite erstreckenden Endabschnitt eine Klebstoff abweisende Materialschicht, einen sogenannten Trennstreifen, vorgesehen sind. Am Klebstoff abweisenden Trennstreifen kann man das jeweilige einzelne Klebeband erfassen und ohne Ausfransen abreißen. Es hat sich aber gezeigt, daß mitunter das nächstfolgende Klebeband dabei am vorderen Rand ebenfalls abgelöst wird, so daß anschliessend die Funktion der Klebebandrolle beeinträchtigt ist.

Der Erfindung liegt die Aufgabe zugrunde, die bekannte, zuvor erläuterte Klebebandrolle so auszugestalten und weiterzubilden, daß unter Beibehaltung der Möglichkeit, einen Bandabschnitt praktisch ungehindert am Rand erfassen und abtrennen zu können, ein ungewolltes randseitiges Abheben eines neuen, folgenden Bandabschnittes weniger leicht auftritt.

Die Lösung dieser Aufgabe gelingt bei einer Klebebandrolle mit den Merkmalen des Oberbegriffs von Anspruch 1 dadurch, daß die Klebebänder abwechselnd in der einen und der anderen Aufwickelrichtung um den Wickelkörper übereinander gewickelt sind und daß bei jedem Klebeband die Klebstoff abweisende Materialschicht auf der Klebstoffschicht desselben Klebebandes aufliegt.

Bei dieser Ausbildung kann jedes der von vornherein getrennten Klebebänder an dem mit der Klebstoff abweisenden Materialschicht versehenen Endabschnitt erfaßt und von der Klebebandrolle abgezogen werden, ohne daß Schwierigkeiten beim Erfassen des Klebebandes auftreten, weil das freiliegende Ende keinerlei Fransen aufweist und nicht an der darunterliegenden Klebstoffschicht haftet. Aufgrund der von Klebeband zu Klebeband wechselnden Wickelrichtung ist beim Abziehen eines Klebebandes auch sichergestellt, daß das folgende Klebeband nicht mit abgezogen wird, weil die Abziehrichtung des äußersten Klebebandes der Aufwickelrichtung des folgenden Klebebandes entspricht.

Vorzugsweise liegt die Klebstoff abweisende Materialschicht jedes aufgewickelten Klebebandes auf der Klebstoffschicht in dem anderen Endabschnitt desselben Klebebandes auf. Hierbei ist jedes Klebeband kleiner als zwei maximale Umfangslängen der Klebebandrolle und nur etwas größer als eine maximale Umfangslänge der Klebebandrolle, so daß sich diese Klebebandrolle besonders für eine Kleiderreinigungsvorrichtung eignet, bei der man bestrebt ist, die Länge eines Klebebandes möglichst nicht viel länger als den maximalen Wickelumfang auszubilden, um die gesamte Klebstoffschicht eines Klebebandes zum Reinigen eines Kleidungsstücks auszunutzen, also die Endabschnitte eines Klebebandes sich nicht allzu weit überlappen zu lassen, um Material einzusparen.

Sodann kann der Überlappungsbereich der Endabschnitte eines jeden Klebebandes relativ zu dem Überlappungsbereich der Endabschnitte des zuvor aufgewickelten benachbarten Klebebandes in Umfangsrichtung des Wickelkörpers versetzt sein. Diese Ausbildung hat den Vorteil, daß die Klebebandrolle trotz der Überlappung der Endabschnitte eines jeden Klebebandes weitgehend kreisförmig bleibt, was das Reinigen eines Kleidungsstücks durch Abrollen der Klebebandrolle auf dem Kleidungsstück mit der Klebstoffschicht nach außen erleichtert.

Ferner kann der keine Klebstoff aufweisende Materialschicht aufweisende Endabschnitt des zuerst aufgewickelten Klebebandes auf seine klebstofffreie Seite umgeschlagen sein. Der umgeschlagene Abschnitt klebt dann an der Außenseite des Wickelkörpers etwas fest, so daß das erste Klebeband mit seinem umgeschlagenen Abschnitt beim Aufwickeln des Klebebandes auf dem Wickelkörper fixiert ist und sich beim Aufwickeln nicht in Umfangsrichtung verschiebt.

Die Erfindung und Ihre Weiterbildungen werden nachstehend anhand der Zeichnung eines bevorzugten Ausführungsbeispiels näher beschrieben. Es zeigen:
- Fig. 1: eine perspektivische Ansicht einer Kleiderreinigungsvorrichtung mit einer erfindungsgemäßen Klebebandrolle,
- Fig. 2: eine Endansicht einer erfindungsgemäßen Klebebandrolle und
- Fig. 3: eine perspektivische Ansicht eines erfindungsgemäßen Klebebandes.

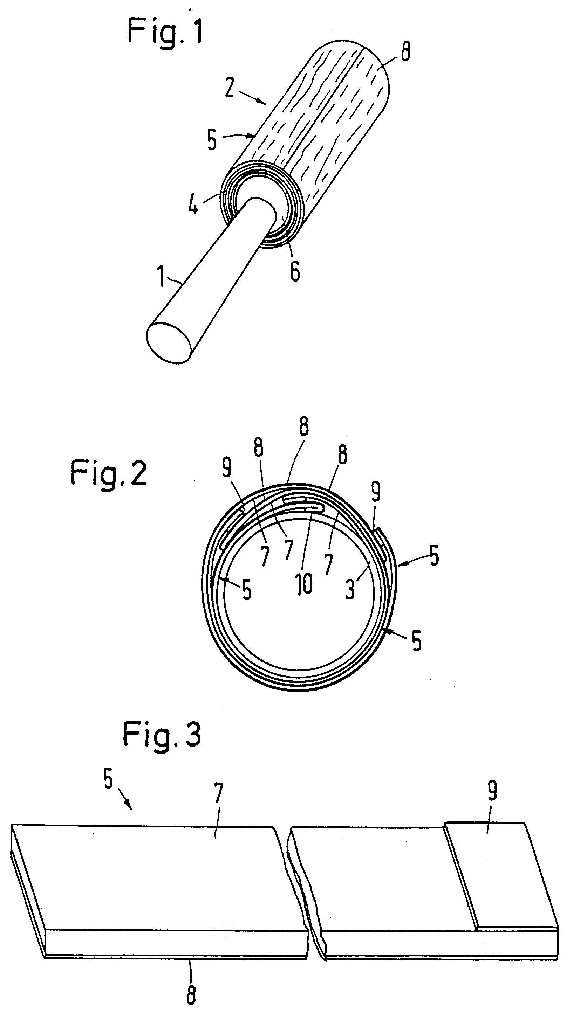

Die in Fig. 1 dargestellte Kleiderreinigungsvorrichtung hat einen leicht komischen Handgriff 1 und eine auf einer axialen Verlängerung des Handgriffs 1 drehbar gelagerte Kleiderreinigungsrolle 2, die einen (in Fig. 1 nicht sichtbaren) hohlzylindrischen Wickelkörper 3 (siehe Fig. 2) aus steifem Karton aufweist. Der Wickelkörper 3 ist mit einem Klebebandwickel 4 versehen. Dieser besteht aus mehreren getrennten Klebebändern 5, wie es in Fig. 2 dargestellt ist. In Fig. 3 ist ein abgewickeltes Klebeband 5 perspektivisch dargestellt. Der Wickelkörper 3 ist an seinen Enden von Scheiben 6 eingefaßt, die auf der Achsverlängerung des Handgriffs 1 drehbar gelagert sind und den Wickelkörper 3 tragen.

In Fig. 2 sind zur Veranschaulichung nur drei Klebebänder 5 dargestellt, obwohl in der Praxis eine weit größere Anzahl von Klebebändern 5 auf dem Wickelkörper 3 aufgewickelt ist.

Wie Fig. 2 und 3 zeigen, besteht jedes Klebeband 5 aus einem tragenden Streifen 7 aus biegsamen, nicht klebendem Material, insbesondere Papier, vorzugsweise Kreppapier, der nur auf seiner einen Seite mit einer Klebstoffschicht 8 und auf der anderen Seite in einem sich über die gesamte Streifenbreite erstreckenden Endabschnitt mit einer Klebstoff abweisenden Materialschicht 9 versehen ist. Die Klebebänder 5 sind abwechselnd in der einen und der anderen Richtung um den Wickelkörper 3 derart übereinander gewickelt, daß die klebstofffreien Seiten der Streifen 7 wenigstens aller nach dem zuerst aufgewickelten Klebeband 5 aufgewickelten Klebebänder 5 dem Wickelkörper 3 zugekehrt sind und bei jedem Klebeband 5 die Klebstoff aufweisende Materialschicht 9 auf der Klebstoffschicht 8 desselben Klebebandes 5 aufliegt. Der Überlappungsbereich der Endabschnitte eines jeden Klebebandes 5 ist relativ zu dem Überlappungsbereich der Endabschnitte des zuvor aufgewickelten benachbarten Klebebandes 5 in Umfangsrichtung des Wickelkörpers 3 versetzt. Der keine Klebstoff abweisende Materialschicht 9 aufweisende Endabschnitt 10 des zuerst aufgewickelten Klebebandes 5 ist auf seine klebstofffreie Seite umgebogen.

Bei dem Klebstoff abweisenden Material kann es sich um Stearin oder Paraffin handeln. Statt aus Papier kann der Streifen 7 auch aus einem anderen Material, beispielsweise Kunststoff, ausgebildet sein. Sodann kann es sich bei den Klebebändern 5 auch um Heftpflaster oder andere Klebebänder handeln.

Um das äußerste Klebeband 5 abzuziehen, nach dem es - im Falle einer Kleiderreinigungsrolle - verbraucht ist, d. h. daß die Außenseite der Klebstoffschicht 8 verschmutzt ist, so daß sie keine weiteren Schmutzteilchen mehr aufnimmt, wird das äußerste Klebeband 5 in seinem mit der Klebstoff abweisenden Materialschicht 9 versehenen Endabschnitt erfaßt und entgegen der Aufwickelrichtung dieses Klebebandes 5 von dem Klebebandwickel 4 abgewickelt. Das Erfassen dieses Endabschnitts bereitet keine Schwierigkeiten, weil er nicht an dem anderen Endabschnitt desselben Klebebandes 5 festklebt. Beim Abwickeln des äußersten Klebebandes 5 wird auch nicht gleichzeitig das darunter liegende Klebeband 5 abgewickelt, weil die auf das unter dem äußersten Klebeband 5 liegende Klebeband 5 ausgeübte Zugkraft beim Abziehen des äußersten Klebebandes 5 in Aufwickelrichtung des darunter liegenden Klebebandes 5 gerichtet ist. Der umgeschlagene Endabschnitt 10 verhindert, daß das zuerst auf den Wickelkörper 3 gewickelte Klebeband 5 sich beim Aufwickeln in Umfangsrichtung verschiebt, da der umgeschlagene Endabschnitt 10 mit seiner Klebeschicht 8 am Wickelkörper 3 haftet.

Zu Fig. 2 und 3 sei ergänzend darauf hingewiesen, daß die Klebebänder 5 im Maßstab unverhältnismäßig stark vergrößert dargestellt sind, da die einzelnen Schichten der Klebebänder 5 im natürlichen Maßstab nicht unterscheidbar sind.

## Patentansprüche

1. Klebebandrolle, insbesondere für eine Kleiderreinigungsvorrichtung, mit einem Wickelkörper (3) und mehreren voneinander getrennten Klebebändern (5), die auf dem Wickelkörper (3) aufgewickelt sind, wobei die klebstofffreien Seiten zumindest aller nach dem zuerst aufgewickelten Klebeband (5) aufgewickelten Klebebänder (5) dem Wickelkörper (3) zugekehrt sind, und wobei jedes Klebeband (5) einen tragenden Streifen (7) aus biegsamem, nicht klebendem Material, insbesondere aus Papier, sowie nur auf der einen Seite des Streifens (7) eine Klebstoffschicht (8) und auf der anderen Seite des Streifens (7) in einem sich über die gesamte Streifenbreite erstreckenden Endabschnitt des Streifens (7) eine Klebstoff abweisende Materialschicht (9) aufweist, **dadurch gekennzeichnet**, daß die Klebebänder (5) abwechselnd in der einen und der anderen Aufwickelrichtung um den Wickelkörper (3) übereinander gewickelt sind und daß bei jedem Klebeband (5) die Klebstoff abweisende Materialschicht (9) auf der Klebstoffschicht desselben Klebebandes (5) aufliegt.

2. Klebebandrolle nach Anspruch 1, dadurch gekennzeichnet, daß die Klebstoff abweisende Materialschicht (9) jedes aufgewickelten Klebebandes (5) auf der Klebstoffschicht (8) desselben Klebebandes (5) gerade in dem Endabschnitt des Streifens (7) aufliegt.

3. Klebebandrolle nach Anspruch 1 oder 2, dadurch gekennzeichnet, daß der Überlappungsbereich der Endabschnitte eines Klebebandes (5) relativ zu dem Überlappungsbereich der Endabschnitte des zuvor aufgewickelten benachbarten Klebebandes (5) in Umfangsrichtung des Wickelkörpers (3) versetzt ist.

4. Klebebandrolle nach einem der Ansprüche 1 bis 3, dadurch gekennzeichnet, daß auch die klebstofffreie Seite des zuerst aufgewickelten Klebebandes (5) dem Wickelkörper (3) zugekehrt ist und daß der keine Klebstoff abweisende Materialschicht (9) aufweisende Endabschnitt (10) dieses Klebebandes (5) auf seine klebstofffreie Seite, also zum Wickelkörper (3) hin umgeschlagen ist.

## Claims

1. An adhesive tape roll, particularly for a clothes cleaning device, having a winding spool (3) and a plurality of adhesive tapes (5) separated from each other which are wound on the winding spool (3), wherein the adhesive-free sides of at least all the adhesive tapes (5) which are wound after the adhesive tape (5) which is wound first face the winding spool (3), and wherein each adhesive tape (5) has a backing strip (7) made of flexible, non-adhesive material, particularly of paper, and has an adhesive layer (8) on one side of the strip (7) only and has a layer of adhesive-repellent material (9) on the other side of the strip (7) in an end section of the strip (7) extending over the entire strip width, characterised in that the adhesive tapes (5) are wound one above another alternately in one and the other direction of winding round the winding spool (3), and that in each adhesive tape (5) the layer of adhesive-repellent material (9) rests on the adhesive layer of the same adhesive tape (5).

2. An adhesive tape roll according to claim 1, characterised in that the layer of adhesive-repellent material (9) of each wound adhesive tape (5) rests on the adhesive layer (8) of the same adhesive tape (5) just in the end section of the strip (7).

3. An adhesive tape roll according to claim 1 or 2, characterised in that the region of overlap of the end sections of an adhesive tape (5) is displaced in the circumferential direction of the winding spool (3) in relation to the region of overlap of the end sections of the previously wound, adjacent adhesive tape (5).

4. An adhesive tape roll according to any one of claims 1 to 3, characterised in that the adhesive-free side of the adhesive tape (5) which is wound first also faces the winding spool (3), and that the end section (10) of this adhesive tape (5) which has no adhesive-repellent layer of material (9) is folded back on to its adhesive-free side and therefore towards the winding spool (3).

## Revendications

1. Rouleau de ruban adhésif, en particulier pour un dispositif de nettoyage de vêtements, comprenant un corps d'enroulement (3) et plusieurs rubans adhésifs (5) séparés l'un de l'autre qui sont enroulés sur le corps d'enroulement (3), dans lequel les côtés non adhésifs d'au moins tous les rubans adhésifs (5) enroulés après le ruban adhésif (5) enroulé en premier lieu sont tournés vers le corps d'enroulement (3), et dans lequel chaque ruban adhésif (5) présente une bande de support (7) en une matière flexible non adhésive, en particulier en papier, ainsi que, seulement sur un côté de la bande (7), une couche adhésive (8) et sur l'autre côté de la bande (7), dans une section terminale de la bande (7) s'étendant sur toute la largeur de la bande, une couche de matière anti-adhésive (9), caractérisé en ce que les rubans adhésifs (5) sont enroulés en superposition alternativement dans l'un et l'autre sens d'enroulement autour du corps d'enroulement (3), et en ce que, dans chaque ruban adhésif (5), la couche de matière anti-adhésive (9) est disposée sur la couche adhésive du même ruban adhésif (5).

2. Rouleau de ruban adhésif selon la revendication 1, caractérisé en ce que la couche de matière anti-adhésive (9) de chaque ruban adhésif enroulé (5) est disposée sur la couche adhésive (8) du même ruban adhésif (5) précisément dans la section terminale de la bande (7).

3. Rouleau de ruban adhésif selon la revendication 1 ou 2, caractérisé en ce que le domaine de chevauchement des sections terminales d'un ruban adhésif (5) par rapport au domaine de chevauchement des sections terminales du ruban adhésif voisin (5) enroulé antérieurement est décalé en direction périphérique du corps d'enroulement (3).

4. Rouleau de ruban adhésif selon l'une quelconque des revendications 1 à 3, caractérisé en ce qu'également le côté non adhésif du ruban adhésif (5) enroulé en premier lieu est tourné vers le corps d'enroulement (3) et en ce que la section terminale (10) de ce ruban adhésif (5) ne présentant pas de couche de matière anti-adhésive (9) est rabattue sur son côté non adhésif, c'est-à-dire en direction du corps d'enroulement (3).
